# EUROPEAN PATENT APPLICATION

(11) **EP 4 381 957 A1**
(43) Date of publication of application: **12.06.2024**
(21) Application number: 22211569.3
(22) Date of filing: 06.12.2022
(51) Int. Cl.: A23J 3/22

(54) **FOOD PRODUCT**

(71) Applicant: Meatless B.V., 4462 GJ Goes (NL)
(72) Inventor: The designation of the inventor has not yet been filed
(74) Representative: Koster, Nico

(57) **Abstract**

Disclosed is a method for preparing a food product comprising mycoprotein and a hydrocolloid, such as an alginate. The method comprises preparing a pre-mix by mixing at least a mycoprotein, a plant protein, an alginate, and water; shaping the pre-mix to form a pre-mix shape; curing a skin part of the pre-mix shape by contacting the pre-mix shape from the outside with a first aqueous solution comprising calcium for a first contact time to obtain a skin-cured pre-mix shape; forming individual shapes from the skin-cured pre-mix shape while substantially preserving the cured skin part; and further curing the individual shapes by contacting the individual shapes with a second aqueous solution comprising calcium for a second contact time. Also disclosed is a food product obtainable by the method.

## Description

### FIELD OF THE INVENTION

The present invention relates to a method for preparing food products comprising mycoprotein in combination with hydrocolloids, and to a food product obtainable by the method.

### BACKGROUND TO THE INVENTION

Consumers are increasingly leaning towards ways to reduce, eliminate or substitute products originating from livestock in their diets, thereby moving towards vegan products. Reasons for this may be religious, environmental concerns, animal welfare, personal health or simply as a matter of choice. Meat products specifically are facing a lot of scrutinies, as livestock rearing may have a negative environmental effect, such as greenhouse gas emissions, the use of water and (food) resources, and the effects of land clearing measures. The increasing demand for non-livestock-derived products has led to increased efforts of the food industry to come up with vegetarian or vegan substitutes.

The main challenge in developing such substitute products is to create a product with the desired sensory characteristics, such as appearance, texture, smell, taste and the like, while maintaining a healthy nutritional profile. To develop meat substitute products, based on other protein sources than animal proteins, mimicking the fibrous nature and texture of meat is especially challenging. Moreover, it is preferred that these meat substitute products do not contain preservatives, synthetic flavours, colourants, and the like, leading to so-called 'clean label' products.

NL1008364 discloses a method of producing an artificial meat product by preparing an emulsion of a non-animal protein, a plant-based thickening agent and water, and subsequently mixing the emulsion with a solution of a calcium salt or a magnesium salt to obtain a fibrous product, and finally removing water from the fibrous product.

WO2016/120594 discloses an edible formulation comprising edible fungal particles of a filamentous fungus and calcium ions and a method of preparing said edible formulation. The edible fungal particles are provided as a mycoprotein paste. The mycoproteins in the known edible formulation may produce a fibrous structure, and when provided in an aqueous mixture, this fibrous structure may further develop during cooling or freezing.

The known methods disclosed above do not provide food products having the sensory characteristics needed for certain meat substitute products, such as pieces of chicken, beef chunks, and the like. A further disadvantage of the known methods is that preparing meat substitute products in a time-efficient and continuous way needs improvement. Also, meat substitute products produced by the known methods tend to have a rather disagreeable taste, and optimisation is required.

It is therefore an object of the present invention to at least partly overcome or improve one or more of the disadvantages of the prior art.

### SUMMARY OF THE INVENTION

The present invention thereto provides a method for preparing a food product comprising mycoprotein, the method comprising the steps of:
a) preparing a pre-mix by mixing at least a mycoprotein, a plant protein, an alginate, and water;
b) shaping the pre-mix to form a pre-mix shape;
c) curing a skin part of the pre-mix shape by contacting the pre-mix shape from the outside with a first aqueous solution comprising calcium for a first contact time to obtain a skin-cured pre-mix shape;
d) forming individual shapes from the skin-cured pre-mix shape while substantially preserving the cured skin part; and
e) further curing the individual shapes by contacting the individual shapes with a second aqueous solution comprising calcium for a second contact time.

It was found that when a pre-mix shape, comprising a mycoprotein, a plant protein mixture, an alginate and water, is first contacted from the outside with an aqueous solution comprising calcium, a thin layer, or skin part, of cured pre-mix is quickly formed on the outside of the pre-mix shape to form a skin-cured pre-mix shape. This cured skin part can reduce or even prevent any sticking of the skin-cured pre-mix shape to processing equipment that is used in forming the individual shapes, allowing for a fast, clean and efficient shaping process.

It has also been found that the skin-cured pre-mix shape allows it to easily form individual shapes while substantially preserving the cured skin part. Substantially preserving the skin part means that the formed individual shapes also comprise a cured skin part, at least over a part of their surface area. For instance, if the individual shapes are formed from the skin-cured pre-mix shape by cutting, the cured skin part may be disrupted at the cuts but will still be present over the remaining, uncut, surface area of the individual shapes.

According to the invention, the cured skin part of the skin-cured pre-mix shape and/or the skin-cured individual shapes envelops an uncured core part of the pre-mix shape and/or individual shapes. This is because the curing is effectuated by contacting the pre-mix shape from the outside with the first aqueous solution. In this process, the first aqueous solution may diffuse into the pre-mix shape from the outside towards the inside of the pre-mix shape over some distance. This distance may influence the thickness of the cured skin part.

The first contact time should be sufficiently long to obtain the cured skin part. This first contact time may depend somewhat on the desired thickness of the skin part, as will be further elucidated below.

According to step e) of the method of the invention, the individual shapes are cured further by contacting the individual shapes with a second aqueous solution comprising calcium for a second contact time, thereby providing the food product. The second contact should be sufficiently long to enable the further curing of the individual shapes. With the wording further curing is meant that the core parts of the individual shapes are allowed to also cure at least over part of their cross-sectional area, preferably over essentially all of their cross-sectional area. The second contact time may depend on the desired cure of the core part, as will be further elucidated below. It is not excluded that in the step e) of further curing, the skin part may be cured to a further extent than was obtained in step c).

The invented method uses an alginate in the pre-mix. Alginates are the metal salts of alginic acid, a naturally occurring, edible polysaccharide found in brown algae. The foremost reason behind the use of hydrocolloids such as alginates in food products is their ability to modify the rheology of the food product. Alginates are typically used as thickening and gelling agents. Suitable alginates may for instance comprise sodium, potassium, and calcium alginates, without being limited thereto. Alginate may be obtained in filamentous, granular, or powdered form. According to the invention, the pre-mix containing the alginate is contacted with an aqueous solution that comprises calcium, such as a calcium salt solution. The alginate polymer chains are then linked by the calcium ions, leading to gelation. This linking process is referred to as 'curing' or 'further curing' in the present application.

To obtain the desired sensory characteristics of the food product, the individual shapes are further cured or 'ripened' in step e) of the process. In contrast to the quick formation of the cured skin part of the pre-mix shape, curing or 'ripening' the individual shapes may take longer. It has been found that further curing or ripening the individual shapes by contacting the individual shapes with a calcium solution in the order of hours at typical refrigeration temperatures is particularly suited to obtain a food product with the desired sensory characteristics needed for certain meat substitutes, such as pieces of chicken, beef chunks, and the like.

While the calcium solution can contain any suitable calcium salt to have a curing effect, it may be desirable to use salts other than calcium chloride. Non-limiting examples of preferred calcium salts, which are allowed for food applications, are calcium acetate, calcium orthophosphate, calcium carbonate, calcium lactate, calcium ascorbate, calcium propionate, calcium sulfate, or any combinations thereof.

It was found that different sources of edible mycoprotein are suitable to be used in the method according to the invention. Edible mycoprotein from *Fusarium,* and *Rhizopus* are particularly suitable.

The method according to the invention may lead to the desired food product with different amounts of plant protein, and different sources of said plant protein. The plant protein sources can for instance be selected from sources rich in proteins, such as, but not limited to, pea protein, faba bean protein, potato protein, or rice protein; also, sources having a lower protein content, such as, but not limited to, rice flour or faba bean flour, can be used. To obtain a food product having a desired nutritional profile, it is preferred to use sources rich in proteins. However, potato proteins are preferably not used, or to a limited extent only.

During the development of the invention, it turned out that the ratio of the amount of the mycoprotein and the amount of the plant protein can have an effect on the texture of the food product. When the relative amount of the mycoprotein, compared to the amount of plant protein, is lower, it can provide for a smoother texture of the food product, while a higher relative amount of the mycoprotein can lead to a food product with a more fibrous texture.

The invented method yields a food product. By this is meant that a product is obtained that is in principle edible. However, additional steps may be required to meet regulations, such as those related to microbial requirements. The food product obtained in the method of the invention after step e) may for instance be subjected to further processing steps including performing the method under clean room conditions to avoid microbial contamination, rinsing the individual shapes; adjusting the pH of the individual shapes; treating the individual shapes at elevated temperatures, such as pasteurization to remove microbial contamination; cooling the individual shapes; freezing the individual shapes; reducing the size of the individual shapes; removing water from the individual shapes; combining several pieces of (further processed) food product into another (semi-)finished food product, such as patties, balls, fillet, meat-like cuts, and the like; and any combinations thereof.

To reduce or remove any microbial contamination, the food product is preferably heat-treated at an elevated temperature after having been further cured in step e) of the invention. Such a treatment may for instance comprise heating the food product in a water bath at a temperature between 25°C and 100°C, more preferably between 35°C and 95°C, even more preferably between 45°C and 90°C, and most preferably between 55°C and 85°C, such as at about 75 °C for a period of time that ranges from 5 to 100 min, more preferably from 10 to 80 min, even more preferably from 15 to 60 min and most preferably from 20 to 50 min, such as at about 25 min to obtain the food product. Preferably, the heating of the food product in the water bath is done such that a rinsing action on the food product takes place. Following the heating of the food product, the heat-treated food product preferably is cooled to freezing temperatures; this will allow storage and transport of the food product under hygienic conditions. The freezing temperatures are below 0°C, preferably are between -10°C and -30°C.

The present invention also provides a food product obtainable by the invented method and its embodiments described herein having novel specific properties.

The invention in particular provides a food product obtainable by the invented method and having a calcium content lower than known in the art, preferably between 5 and 2000 ppm, more preferably between 50 and 1500 ppm, even more preferably between 100 and 1000 ppm, even more preferably between 150 and 600 ppm, and most preferably between 200 and 450 ppm. The calcium content is relative to the total weight of the food product, preferably after having treated the individual shapes at elevated temperatures to individual shapes to remove any microbial contamination, as disclosed hereinabove. The skin and the core of the food product obtainable according to the invention preferably are essentially fully cured.

The food product obtainable by the invented method surprisingly contains a relatively low calcium content while at the same time having a relatively high degree of cure, preferably a complete cure. A complete cure is meant to be a chemically complete cure, as well as a geometrically complete cure, wherein the individual shapes are chemically completely cured over their complete cross-section.

### DETAILED DESCRIPTION OF THE INVENTION

The present invention will now be described further in more detail. Each embodiment defined may be combined with any other embodiment or embodiments unless clearly indicated to the contrary. In particular, any feature indicated as being preferred or advantageous may be combined with any other feature or features indicated as being preferred or advantageous.

The present invention provides a method for preparing a food product comprising mycoprotein, the method comprising the steps of:
a) preparing a pre-mix by mixing at least a mycoprotein, a plant protein, an alginate, and water;
b) shaping the pre-mix to form a pre-mix shape;
c) curing a skin part of the pre-mix shape by contacting the pre-mix shape from the outside with a first aqueous solution comprising calcium for a first contact time;
d) forming individual shapes from the pre-mix shape while substantially preserving the cured skin part; and
e) further curing the individual shapes by contacting the individual shapes with a second aqueous solution comprising calcium for a second contact time, thereby providing the food product.

It was found that when a pre-mix shape, comprising a mycoprotein, a plant protein mixture, an alginate and water, is first contacted from the outside with a solution of calcium, before forming individual shapes, then a thin layer of cured pre-mix is quickly formed on the outside of the pre-mix shape as a cured skin part. This cured skin part can reduce or prevent, or at least hinder, any sticking of parts of the pre-mix shape to processing equipment that may be used during formation of the individual shapes. The individual shapes are then further cured by contacting them with a second aqueous solution comprising calcium for a second contact time. This two-step curing process allows obtaining the desired sensory characteristics of the resulting food product, such as, but not limited to, appearance, texture, taste and bite. It also provides flexibility in obtaining the desired sensory characteristics.

The pre-mix may be prepared according to any known method. It should be appreciated that the pre-mix is a mixture of at least a mycoprotein, a plant protein, an alginate, and water, and thus represents a mixture of solids and a liquid or liquids. The ingredients of the pre-mix may be mixed together in one step. In a preferred embodiment however, the plant protein, the alginate and water are mixed separately to provide a slurry. The mycoprotein is subsequently mixed with the plant protein/alginate/water slurry, and optionally additional water and/or additional alginate, to provide the pre-mix. Mixing equipment known to one skilled in the art may be used in this mixing step. This embodiment has proven to be beneficial for the properties of the resulting food product.

The pre-mix can have a consistency that allows it to be shaped, preferably into a substantially stable pre-mix shape, for instance by hand or by machine. The pre-mix therefore is preferably provided as a paste with a certain, albeit variable, consistency. The desired consistency and ability to shape may be obtained by for instance providing a sufficiently high solid content of the pre-mix. This sufficiently high solids content can be determined by routine experimentation of one skilled in the art.

The pre-mix shape is suitably formed by shaping the pre-mix. The shaping may be carried out by hand or by any suitable shaping equipment known in the art.

Both the pre-mix shape and the individual shapes have a skin part and a core part, wherein the skin part and the core part are mutually exclusive, and together form the complete cross-section of the pre-mix shape and/or the individual shapes.

The method of the invention is suitable for preparing a range of different food products, with different textures, appearances, nutritional profiles, etc. The method of the invention is particularly suitable for providing meat substitute products having a larger size than minced beef for instance, such as pieces of chicken, beef chunks, and the like. It is however also suitable to obtain minced beef substitute products.

Throughout the application, a "food product" and "food products" are synonymously used to also describe multiple pieces of a food product.

Throughout the application, an "aqueous solution comprising calcium", "a solution of calcium", and a "calcium solution" are synonymously used to describe a solution of calcium in water. Such a solution can be suitably prepared by dissolving a calcium salt in water and produces calcium ions.

The first and the second calcium solution used in respectively the first and the second curing step, can be selected to be different, such as, but not limited to, having a different composition of calcium salts and/or a different calcium concentration. In another embodiment, they can be the same solution. Preferably, the first and the second calcium solution are the same, at least with respect to the type of calcium salt used, as this allows for a simpler process.

As mentioned hereinbefore, the formation of the cured skin part develops during the first contact time and this may happen quickly or even almost instantaneously. In contrast to the formation of the cured skin part of the pre-mix shape on the outside thereof, the further curing of step e) of the core part of the individual shapes may take significantly longer. In an embodiment, the present invention provides a method as defined herein, wherein the second contact time is longer than the first contact time.

Providing the cured skin part of the pre-mix shape allows for a cleaner process, possibly without clogging or sticking of parts of the skin-cured pre-mix shape to processing equipment for forming the individual shapes. It further allows obtaining the desired sensory characteristics of the food product, such as, but not limited to, appearance, taste, texture and bite. Surprisingly, providing the cured skin part of the skin-cured pre-mix shape, while a core part of the skin-cured pre-mix shape remains softer allows the individual shapes to be easily formed by pulling or tearing the individual shapes from the skin-cured pre-mix shape, leading to skin-cured individual shapes with relatively rough edges. This provides a more natural and appealing look to the produced food product. By contrast, and not according to the invention, when curing the skin-cured pre-mix shape substantially fully - i.e. where both the skin part and the core part of the skin-cured pre-mix shape are cured - before forming the individual shapes, pulling or tearing the individual shapes from the skin-cured pre-mix shape is more difficult or even impossible, and the skin-cured pre-mix shape needs to be broken or cut into the individual shapes. This leads to a more artificial appearance with strongly delineated edges of the individual shapes. Such shapes are not appealing.

According to the invention, the first contact time necessary for curing the skin part of the pre-mix shape can be selected within a suitable range, that still leaves an uncured core part in the skin-cured pre-mix shape. In a useful embodiment, a method is provided wherein the first contact time is at most 300 sec., preferably at most 180 sec., even more preferably at most 60 sec., yet even more preferably at most 10 sec.. The first contact time is non-zero and preferably is at least 5 sec., more preferably at least 4 sec., more preferably at least 3 sec., even more preferably at least 2 sec., yet even more preferably at least 1 sec., and most preferably at least 0.5 sec.. It turned out that very short first contact times of around 0.5 to 5 sec. already may provide the effect of providing the skin part having a suitable thickness.

To allow for a faster process of forming the individual shapes, it is advantageous to have the first contact of the pre-mix with the first calcium solution as short as possible. On the other hand, depending on the desired size of the individual shaped products, and the viscosity or malleability of the skin-cured pre-mix shape, longer contact times could be beneficial to avoid clogging or fouling of the process equipment.

Contacting the pre-mix shape with the first calcium solution can be performed in several different ways, such as, but not limited to, by spraying, pouring, submersing, and other methods easily envisioned by one skilled in the art. Preferably, contacting the pre-mix shape with the first calcium solution is performed by spraying. In another preferred embodiment, contacting the pre-mix shape with the first aqueous calcium solution is performed by submersing the pre-mix in said first aqueous solution.

According to the invention, a skin part of the pre-mix shape is cured by contacting the pre-mix shape from the outside with the first aqueous solution. The dimensions of the skin part may depend on the duration of the first contact time and other factors, such as the rate of diffusion of the first aqueous solution into the pre-mix shape. In a useful embodiment, a method is provided wherein the skin part of the skin-cured pre-mix shape in at least one cross-section comprises at most 50% of the at least one cross-sectional area of the skin-cured pre-mix shape, more preferably at most 40%, more preferably at most 30%, even more preferably from 0.1 to 20%, yet even more preferably from 0.5 to 10%, and yet even more preferably from 1 to 5% of the at least one cross-sectional area of the skin-cured pre-mix shape. More preferably, a substantial amount and even more preferably all of the cross-sections of the skin-cured pre-mix shape comprise a skin part of at most 50% of the at least one cross-sectional area of the skin-cured pre-mix shape, more preferably at most 40%, more preferably at most 30%, even more preferably from 0.1 to 20%, yet even more preferably from 0.5 to 10%, and yet even more preferably from 1 to 5% of the at least one cross-sectional area of the skin-cured pre-mix shape

As mentioned hereinbefore, both the skin-cured pre-mix shape and the individual shapes have a skin part and a core part, wherein the skin part and the core part are mutually exclusive, and together form the complete cross-section of the skin-cured pre-mix shape or the individual shapes. When the skin part of the skin-cured pre-mix shape or the individual shapes comprises at most 50% of a cross-sectional area of the pre-mix shape or individual shapes, then the core part comprises at least 50%. When the skin part of the skin-cured pre-mix shape or the individual shapes comprises at most 40%, then the core part comprises at least 60%, and so forth.

In yet another embodiment, the present invention provides a method as defined herein, wherein the core part of the skin-cured pre-mix shape or of the individual shapes in at least one cross-section thereof comprises at least 50% of the cross-sectional area of the skin-cured pre-mix shape or the individual shapes, more preferably at least 60%, more preferably at least 70%, even more preferably from 80 to 99.9%, yet even more preferably from 90 to 99.5%, and yet even more preferably from 95 to 99% of the average cross-sectional area of the skin-cured pre-mix shape or the individual shapes.

In step e) of the invented method, the individual shapes are further cured which means that the core part of the individual shapes is cured to some extent. It is not necessary that the complete cross-sectional area of the core part is cured, and some uncured core part may remain in the individual shapes. In a preferred embodiment, however, the individual shapes are substantially completely cured during the second contact time, preferably both in terms of geometry and degree of cure.

The further curing of the individual shapes in step e) can lead to desired sensory characteristics of the food product, such as, but not limited to, appearance, texture, taste and bite. Embodiments wherein the individual shapes are substantially completely cured usually provide the most desirable sensory characteristics.

In order to obtain a desired degree of cure, preferably a full cure, the duration of the second contact time may be varied. In suitable embodiments, the presently claimed method is provided such that the second contact time is at least 15 min, more preferably at least 30 min, even more preferably at least 1 hour, preferably from 4 to 48 hours, more preferably from 6 to 36 hours, even more preferably from 8 to 30 hours, yet even more preferably from 10 to 26 hours, yet even more preferably from 16 to 20 hours.

Curing of the individual shapes typically may take significantly longer than the formation of the cured skin part of the pre-mix shape on the outside thereof. As the curing of the individual shapes may depend on diffusion of the aqueous calcium solution into the individual shapes, larger and thicker individual shapes or pieces tend to need longer second contact times than smaller and thinner individual shapes.

Similar to step c), contacting the individual shapes with the second aqueous calcium solution in step e) may be performed in several different ways, such as, but not limited to, by spraying, pouring, submersing, and other methods available to the killed person. Preferably, contacting the individual shapes with the second aqueous calcium solution is performed by submersing the individual shapes in said second aqueous solution.

In yet another embodiment, the present invention provides a method as defined herein, wherein the individual shapes are contacted with the second aqueous solution comprising calcium at a temperature of at most 25°C, preferably at most 15°C, more preferably from 3 to 10°C, even more preferably from 5 to 8°C. As mentioned hereinbefore, the further curing process of step e) may be dependent on diffusion of the calcium solution into the individual shapes. While the further curing process may proceed faster at elevated temperatures, there also could be a higher risk for microbiological contamination and growth. It is therefore preferred to perform the further curing process of step e) at lower temperatures, such as typical refrigeration temperatures. The further curing process at these lower temperatures has the added benefit of further texture development associated with mycoproteins.

In yet another embodiment, the present invention provides a method wherein forming the individual shapes from the skin-cured pre-mix shape, while substantially preserving the cured skin, is performed by cutting, tearing, pulling, or any combinations thereof. It has been found that the method in another embodiment wherein the individual shapes are formed by pulling or tearing the pre-mix, leads to a food product with rougher edges, and thus a more desirable natural and appealing appearance. The method of the invention is particularly suited to provide meat substitute products having a somewhat larger size than minced beef products, such as provided by pieces of chicken, beef chunks, and the like.

While it is possible to form individual shapes from the skin-cured pre-mix shape by any suitable means, it is desirable to use shaping techniques that indeed allow for a more natural appearance of the food product according to the invention. This more natural appearance, for instance for meat substitute products having a somewhat larger size, such as pieces of chicken, beef chunks, and the like, may be produced in an embodiment of the method by using processing equipment that allows to impart onto the skin-cured pre-mix shape a combination of tearing and cutting forces simultaneously.

In an embodiment of the present invention, a method is provided wherein forming the individual shapes in step d) is carried out by tearing apart and/or cutting apart the skin-cured pre-mix shape.

The pre-mix shape may have different geometries, and the invention is not limited to a particular geometry of the pre-mix shape. The geometry may be regular or may be irregular. A useful embodiment however provides a method wherein the pre-mix shape has an elongated appearance, and the individual shapes are formed by tearing apart and/or cutting apart the skin-cured pre-mix shape in a longitudinal direction thereof. The pre-mix elongated appearance may for instance be provided by extruding the pre-mix to provide a continuous elongated pre-mix shape. This can for instance be achieved by continuously pushing the pre-mix through a circular opening, thereby providing a pre-mix in the elongated shape, contacting the elongated pre-mix shape from the outside with a first calcium solution, and having a rotor provided with a series of irregularly shaped blades mounted thereon, one after the other in a radial direction of the rotor, tearing and/or cutting apart the individual shapes from the skin-cured pre-mix shape. Other methods of obtaining the individual shapes may however be used, such as shredding, cutting and/or portioning, and the invention is not limited to a particular method of obtaining the individual shapes.

In yet another embodiment, the present invention provides a method wherein the individual shapes from the skin-cured pre-mix shape are formed while the pre-mix shape is in contact with the first or second aqueous solution comprising calcium. By contacting the skin-cured pre-mix with a calcium solution while the individual shapes are formed, any new surface of the skin-cured pre-mix shape that is being created through the forming or shaping process is immediately exposed to the calcium solution, resulting in a new cured skin outer layer on the skin-cured pre-mix shape being formed into the individual shapes. This embodiment has the advantage that the process is less sensitive to the dimensions of the pre-mix shape or the individual shapes, and/or breaking of the cured skin of the skin-cured pre-mix shape. It is also possible to cure the skin part of the pre-mix shape by contacting the pre-mix shape from the outside with the first aqueous solution, then form the individual shapes from the skin-cured pre-mix shape without contacting with any of the first and second aqueous solutions, and then further cure the individual shapes by contacting the individual shapes with the second aqueous solution.

The concentration of the calcium in the first and/or second solution may be varied, depending on the desired textural properties, such as firmness and hardness for instance. In an embodiment of the present invention, a method is provided wherein the concentration of calcium in the first and/or the second aqueous solution comprising calcium is at least 1 wt%, preferably from at least 2 wt%, more preferably at least 3 wt%, and at most 10 wt%, more preferably at most 5 wt%.

Apart from contact time and temperature, in particular for the further curing step e), the concentration of calcium in the aqueous solution(s) can have an influence on the curing of the skin part and of the individual shapes comprising alginate. A higher concentration of calcium may lead to a faster curing process, which can be specifically advantageous for the first calcium solution, where smaller volumes of calcium solution may be used, and a short curing time is preferred. Due to possibly higher volumes of second aqueous solution needed for the further curing step e), it may be advantageous to use higher calcium concentrations in the aqueous solution to obtain a faster further curing process, but lower calcium concentrations in view of having a lower cost of resources. Therefore, similar to the temperature, a trade-off needs to be selected in terms of efficacy and economics of the process. Applicant has found that a calcium concentration in the first and/or second aqueous solution from 1 to 10 wt% may lead to a suitable process and product in accordance with the desired sensory properties.

Suitable salts to be used in the first and/or second aqueous solution comprise soluble metal salts, preferably soluble calcium salts, such as, but not limited to, calcium acetate, calcium orthophosphate, calcium carbonate, calcium lactate, calcium ascorbate, calcium propionate, calcium sulfate, calcium chloride, or any combinations thereof. Adding the calcium salt to water will provide the calcium ions.

An embodiment of the present invention provides a method wherein the first and/or second aqueous solution comprising calcium is substantially free from chloride, preferably wherein the concentration of chloride is below 0.5 wt%, preferably below 0.2 wt%, even more preferably below 0.1 wt%, relative to the total weight of the aqueous solution.

Preferred calcium salts are those allowed for food applications, such as, but not limited to, calcium acetate, calcium orthophosphate, calcium carbonate, calcium lactate, calcium ascorbate, calcium propionate, calcium sulfate, and/or any combinations thereof.

According to the invention, the pre-mix should contain mycoprotein. The amount of mycoprotein in the pre-mix may be varied. In suitable embodiments of the method the pre-mix contains at least 5 wt% mycoprotein, preferably at least 10 wt%, more preferably at least 15 wt% of mycoprotein, and at most 60 wt%, more preferably at most 50 wt%, and even more preferably at most 40 wt% of mycoprotein, relative to the total weight of the pre-mix. The wt% relate to the dry matter % of the mycoprotein.

Mycoprotein is a form of single-cell protein, also known as fungal protein, derived from fungi for human consumption. Fungi belong to the group of eukaryotic organisms that includes microorganisms such as yeasts and molds, as well as the more familiar mushrooms. These organisms are classified as a kingdom, separately from the other eukaryotic kingdoms, which by one traditional classification may include Plantae, Animalia, Protozoa, and Chromista. The mycoprotein is preferably treated according to well-known practice to make it suitable for human consumption, i.e. to make the mycoprotein edible. Preferably also, the mycoprotein is non-viable. The mycoprotein has preferably been treated to lower the level of RNA which they contain. Thus, the level of RNA in the mycoprotein used is preferably less than the level in an identical fungus when in a viable state. The level of RNA may be reduced as described in WO95/23843 for instance.

It was found that different sources of edible mycoprotein are suitable to be used in the method according to the invention. Non-limiting examples of strains known in the art to provide edible mycoprotein are *Fusarium, Rhizopus, Rhizomucor, Mucor, Mortierella, Neurospora, Aspergillus, Trichoderma, Pleurotus, Ganoderma, Inonotus, Cordyceps, Ustilago, Tuber, Pennicillium, Xylaria, Trametes.* Suitable fungi of the genus *Fusarium* include *Fusarium venenatum.* Suitable fungi of the genus *Rhizopus* include *Rhizopus stolonifer, Rhizopus arrbizus, Rhizopus miehei, Rhizopus pusillus, Rhizopus oligosporus* and, *Rhizopus oryzae.* Edible mycoprotein from *Fusarium,* and *Rhizopus* are particularly preferred.

The mycoprotein may be provided in any physical form, for instance as a paste or solid. It may also be provided in particulate or powder form by milling or slashing the mycoprotein to promote mixing with the other ingredients of the pre-mix. In a suitable embodiment, the present invention provides a method wherein the mycoprotein is provided as particles with an average particle size of from 4 to 30 mm, more preferably from 6 to 25 mm, even more preferably from 8 to 20 mm, and most preferably from 10 to 15 mm. Reducing the size of the mycoprotein particles to within the claimed preferred ranges, before mixing them with the plant protein, the alginate, and water to provide the pre-mix, has a beneficial effect on the properties of the food product. Smaller mycoprotein particles may lead to a finer and firmer structure of the food product.

According to the invention, the pre-mix also contains plant proteins. Plant proteins are based on plant sources such as, but not limited to, vegetables such as broccoli, tapioca, greens, lentils, nuts and seeds, beans, such as faba beans, kidney, pea and soy beans, grains, such as rice and wheat, and the like. Preferred plant proteins are selected from pea protein, faba bean protein, rice protein, flour containing said proteins, or any combinations thereof. To obtain a food product having a desired nutritional profile, it is preferred to use sources rich in proteins.

The amount of plant protein in the pre-mix may also be selected within wide limits. Suitable embodiments provide a method as defined herein, wherein the pre-mix contains at least 2 wt% plant protein, preferably at least 3 wt%, more preferably at least 4 wt%, even more preferably at least 5 wt% of plant proteins, and at most 20 wt%, more preferably at most 15 wt%, and most preferably at most 10 wt% of plant proteins, relative to the total weight of the pre-mix.

In a preferred embodiment, the present invention provides a method as defined herein, wherein the plant protein is selected from pea protein and faba bean protein.

In a more particular embodiment, the present invention provides a method as defined herein, wherein the pre-mix contains from 5 to 10 wt% plant protein, and wherein the plant protein is pea protein.

The amount of alginate in the pre-mix may be selected within wide limits, for instance in function of the water content of the pre-mix, the desired texture of the food product, processability of the pre-mix, and/or any combinations thereof. Suitable embodiments provide a method as defined herein, wherein the pre-mix contains at least 0.1 wt% alginate, preferably from 0.2 to 2.0 wt%, more preferably from 0.3 to 1.5 wt%, and most preferably from 0.5 to 1.0 wt%.

In order to avoid premature curing of the pre-mix comprising the alginate before contacting it from the outside with the first calcium solution, it is desirable in an embodiment to use a source of alginate that is limited in calcium. Suitable embodiments provide a method as defined herein, wherein the alginate is characterized in that the concentration of calcium is below 1.0 wt%, preferably below 0.5 wt%, even more preferably below 0.2 wt%. In a specific embodiment, the present invention provides a method as defined herein, wherein the alginate is sodium alginate.

In a particular embodiment, the present invention provides a method as defined herein, wherein the pre-mix contains at least 0.1 wt% alginate, preferably from 0.2 to 2.0 wt%, more preferably from 0.3 to 1.5 wt%, even more preferably from 0.5 to 1.0 wt%; and wherein the alginate is sodium alginate.

It was further found that mixing the plant protein, the alginate and the water separately, thereby providing a slurry, and subsequently mixing the slurry with the (optionally milled) mycoprotein may have a beneficial effect on the properties of the food product. Mixing the plant protein, the alginate and water before mixing with the mycoprotein may lead to a more homogeneous pre-mix, and/or to less energy needed to mix all ingredients at the same time, which may deteriorate the fibrous structure of the mycoprotein. Suitable embodiments provide a method as defined herein, wherein the plant protein, the alginate and the water are provided as a slurry by first mixing them separately, before mixing with the mycoprotein.

During the development of the invention, it was found that the ratio of the amount of the mycoprotein and the amount of the plant protein can have an effect on the texture of the food product. When the relative amount of the mycoprotein, compared to the amount of plant protein, is lower, it can provide for a smoother texture of the food product, while a higher relative amount of the mycoprotein can lead to a food product with a firmer texture.

In a specific embodiment, the present invention provides a method as defined herein, wherein the pre-mix contains at least 5 wt% mycoprotein, preferably at most 35 wt%, more preferably from 10 to 30 wt%, even more preferably from 15 to 20 wt%; wherein the pre-mix contains at least 2 wt% plant protein, preferably from 3 to 20 wt%, more preferably from 4 to 15 wt%, even more preferably from 5 to 10 wt%; wherein the plant protein is selected from pea protein, faba bean protein, rice protein, flour containing said proteins, or any combinations thereof; wherein the pre-mix contains at least 0.1 wt% alginate, preferably from 0.2 to 2.0 wt%, more preferably from 0.3 to 1.5 wt%, even more preferably from 0.5 to 1.0 wt%; and wherein the concentration of calcium in the alginate is below 1.0 wt%, preferably below 0.5 wt%, even more preferably below 0.2 wt%.

In another specific embodiment, the present invention provides a method as defined herein, wherein the pre-mix contains at least 5 wt% mycoprotein, preferably at most 35 wt%, more preferably from 10 to 30 wt%, even more preferably from 15 to 20 wt%; wherein the pre-mix contains at least 2 wt% plant protein, preferably from 3 to 20 wt%, more preferably from 4 to 15 wt%, even more preferably from 5 to 10 wt%; wherein the plant protein is selected from pea protein, faba bean protein, rice protein, flour containing said proteins, or any combinations thereof; wherein the pre-mix contains at least 0.1 wt% alginate, preferably from 0.2 to 2.0 wt%, more preferably from 0.3 to 1.5 wt%, even more preferably from 0.5 to 1.0 wt%; and wherein the alginate is sodium alginate.

In a more specific embodiment, the present invention provides a method as defined herein, wherein the pre-mix contains 15 to 20 wt% mycoprotein; wherein the pre-mix contains at least 5 to 10 wt% plant protein; wherein the plant protein is selected from pea protein, faba bean protein, rice protein, flour containing said proteins, or any combinations thereof; wherein the pre-mix contains from 0.5 to 1.0 wt% alginate; and wherein the concentration of calcium in the alginate is below 1.0 wt%, preferably below 0.5 wt%, even more preferably below 0.2 wt%.

In a another more specific embodiment, the present invention provides a method as defined herein, wherein the pre-mix contains 15 to 20 wt% mycoprotein; wherein the pre-mix contains at least 5 to 10 wt% plant protein; wherein the plant protein is selected from pea protein, faba bean protein, rice protein, flour containing said proteins, or any combinations thereof; wherein the pre-mix contains from 0.5 to 1.0 wt% alginate; and wherein the alginate is sodium alginate.

In an even more specific embodiment, the present invention provides a method as defined herein, wherein the pre-mix contains 15 to 20 wt% mycoprotein; wherein the pre-mix contains at least 5 to 10 wt% plant protein; wherein the plant protein is pea protein; wherein the pre-mix contains from 0.5 to 1.0 wt% alginate; and wherein the concentration of calcium in the alginate is below 1.0 wt%, preferably below 0.5 wt%, even more preferably below 0.2 wt%.

In another even more specific embodiment, the present invention provides a method as defined herein, wherein the pre-mix contains 15 to 20 wt% mycoprotein; wherein the pre-mix contains at least 5 to 10 wt% plant protein; wherein the plant protein is pea protein; wherein the pre-mix contains from 0.5 to 1.0 wt% alginate; and wherein the alginate is sodium alginate.

The water content of the mycoprotein before adding it to the pre-mix or to part of the pre-mix may vary from 0 wt% to 80 wt% and more. Preferred water contents of the mycoprotein may range from 10-80 wt%, more preferably from 15-60 wt%, even more preferably from 20-50 wt% and most preferably from 25-40 wt%, relative to the total weight of the mycoprotein. A higher water content of the mycoprotein may enhance the further curing during the second contact time, in particular may enhance the essentially full curing of the core.

According to step d) of the invention, individual shapes are formed from the skin-cured pre-mix shape whereby the skin-cured pre-mix shape may be finite in length, or, alternatively, may be almost infinite, meaning that it comprises a continuously formed string of pre-mix. The dimensions of the individual shapes may be varied according to the specific application they are used for. The method according to embodiments of the invention allows for a wide variation in lengths of the individual shapes, such as a length of 5 mm, of 10 mm, of 25 mm, of 50 mm, of 60 mm, of 75 mm, of 100 mm, of 150 mm, of 200 mm, of 250 mm, up to lengths of 1000 mm, and even more if needed. It is however desirable to have a length considered natural in the field of meat, and meat substitutes. In embodiments of the invention, the food product has a length of at least 5 mm, preferably of at most 500 mm, more preferably of from 10 to 250 mm, even more preferably from 50 to 150 mm.

The method according to embodiments of the invention allows for a wide variation in widths, such as a width of 5 mm, of 10 mm, of 25 mm, of 50 mm, of 60 mm, of 75 mm, of 100 mm, of 150 mm, of 200 mm, of 250 mm, up to widths of 1000 mm, and even more if needed. It is however desirable to have a width considered natural in the field of meat, and meat substitutes. In embodiments of the invention, the food product has a width of at least 5 mm, preferably of at most 500 mm, more preferably of from 10 to 250 mm, even more preferably from 50 to 150 mm.

In yet other embodiments of the invention, the food product has an aspect ratio (length/width) of at least 0.1, preferably at most 10, even more preferably from 0.1 to 5.

In particular embodiments of the invention, the food product may be subjected to further processing steps including but not limited to rinsing the food product; submersing the food product in a sodium chloride solution; adjusting the pH of the food product; treating the food product at elevated temperatures, such as pasteurization; cooling the food product; freezing the food product; reducing the size of the food product; removing water from the food product; combining several pieces of food product into a semi-finished or finished food product, such as patties, balls, fillet, meat-like cuts, and the like; and any combinations thereof.

In other particular embodiments of the invention, the food product may be prepared under clean room conditions to avoid or minimize microbial contamination.

In embodiments of the invention, the composition of the food product can comprise, further to the mycoprotein, the plant protein, alginate, calcium ions, counter ions and water, other compounds, such as, but not limited to, vegetable fats or oils, emulsifiers, preservatives, colorants, flavorants, and the like. These other compounds can be suitably added during any of the steps of the method according to embodiments of the invention.

In yet another embodiment, the present invention provides a method wherein the food product is heat-treated at an elevated temperature of at least 60°C, preferably at most 100°C, more preferably below 80°C, even more preferably from 65 to 75°C in order to avoid or further avoid or minimize microbial contamination. The food product preferably is subsequently cooled down to freezing temperatures of below 0°C, preferably between -10°C and -30°C.

The above treatment at an elevated temperature may be conducted for a suitable period, such as for at least 5 min, more preferably from 10 to 60 min, even more preferably from 20 to 30 min.

The present invention also provides a food product obtainable by the invented method and embodiments thereof, the food product comprising a calcium content lower than known in the art, preferably between 5 and 2000 ppm, more preferably between 50 and 1500 ppm, even more preferably between 100 and 1000 ppm, even more preferably between 150 and 600 ppm, and most preferably between 200 and 450 ppm. The calcium content is relative to the total weight of the food product, preferably after having treated the individual shapes at elevated temperatures to individual shapes to remove any microbial contamination, as disclosed hereinabove.

The food product obtainable by the invented method surprisingly contains a relatively low calcium content while at the same time having a relatively high degree of cure, preferably a complete cure.

The invention will now be described by reference to the below Examples and to the drawings attached to this application, without being limited thereto. In the drawings:
Figure 1A shows the appearance of the food product according to example 2;
Figure 1B shows the appearance of the individual shapes according to comparative example A;
Figure 1C shows the appearance of the individual shapes according to comparative example B;
Figure 1D shows the appearance of the individual shapes according to comparative example C;
Figure 2 shows firmness values of examples 2 and 4, and comparative examples A and B;
Figure 3 shows toughness values of examples 2 and 4, and comparative examples A and B.

### EXAMPLES

### Materials

Pea protein was sourced from Windmill. Sodium alginate was sourced from Shandong Jiejing Group Corporation. Mycoprotein from the strain *Fusarium venenatum* was sourced from either the company Marlow Foods - brand name Quorn - or from the company Enough; as is known, these mycopoteins have been treated to lower the level of RNA which they contain. The mycoprotein sourced from Enough had a solids content of 25 wt%. The Quorn mycoprotein had a solids content of 35 wt.%. Chicken flavor was sourced from Griffith Foods.

### Methods

### General procedure A: Firmness & Toughness

Sensorial properties of the individual shapes were analysed through a standard Texture Profile Analysis using a Stable Microsystems TA.HD plus equipped with a Meullenet Owens Razor Shear Blade and guillotine block. The starting position was set at 20 mm, the test speed was 2 mm/s, and the test distance was 20 mm. The deformation curve of the sample was obtained, from which the parameter Force 1 (g) was determined in function of time (s), according to the manufacturer's protocol.

From these parameters, the following properties were calculated:
Firmness = peak force (g) of Force 1;
Toughness = area (g.s) below the curve; i.e. Force 1 x time

### General procedure B: Determination of calcium content

The sample (mass approx. 10 gram) was prepared by ashing, and subsequently dissolving the ash in hydrochloric acid. The calcium content finallywas determined in the hydrochloric acid solution using a flame photometer (Krüss FP 8801) based on a calibration curve that is established every working day.

### General procedure C: Determination of dry matter

To determine the relative amount of dry matter, a sample was exposed to vacuum and elevated temperature in a vacuum oven. Briefly, a sample was first reduced in size, for instance by mixing. Subsequently, a dry metal crucible is weighed (P1), and an amount of sample (less than 1 cm thickness) was subsequently weighed (P2) into the crucible. The crucible was put in the vacuum oven at 70 °C, and the pressure of the oven was slowly lowered to a pressure of 35 mbar or lower. After 20 hours, the vacuum was slowly removed, and the crucible was put in an exicator to allow it to cool down to room temperature. After cooling down, the crucible was once more weighed (P3).

The dry matter content (wt%) was finally determined by ((P3-P1)/(P2-P1)) x 100. Conversely, the water content (wt%) is 100 minus the dry matter content.

### Example 1

A slurry was prepared by mixing 400 gram of pea protein, 25 gram of sodium alginate, and 2065 gram of water. The mycoprotein, as received from Quorn, was milled at 13 mm. Subsequently 482 gram of milled mycoprotein, 482 gram of the slurry (a 50:50 ratio of mycoprotein fraction and plant protein fraction), 7 gram sodium alginate, and 29 gram of chicken flavor were mixed until a homogeneous pre-mix was obtained ("pre-mix Quorn").

The composition of the resulting pre-mix is shown in Table 1.

**Table 1. Composition data according to Example 1**

| **Slurry** | | | | |
|---|---|---|---|---|
| | **Compound** | | **Mass total batch (g)** | **Relative (%)** |
| | Pea protein | | 400.0 | 16.0% |
| | Sodium alginate | | 35.0 | 1.4% |
| | Water | | 2065.0 | 82.6% |
| | **Subtotal** | | **2500.0** | **100.0%** |

| **Pre-mix** | | | | |
|---|---|---|---|---|
| | **Compound** | | **Mass total batch (g)** | **Relative (%)** |
| | Mycoprotein | | 482.0 | 48.2% |
| | Slurry | | 482.0 | 48.2% |
| | | Pea protein | 77.1 | 7.7% |
| | | Sodium alginate | 6.7 | 0.7% |
| | | Water | 398.1 | 39.8% |
| | Sodium alginate | | 7 | 0.7% |
| | Chicken flavor | | 29 | 2.9% |
| | **Total** | | **1000.0** | **100.0%** |

### Example 2

Individual shapes were prepared by adding the pre-mix of example 1 to a retention bath containing a 4% solution of calcium lactate in water. Directly after this additional step, the pre-mix was flattened, thereby becoming fully submersed in the calcium lactate solution, and individual shapes were formed by tearing pieces from the pre-mix. After all the pieces were torn, the individual shapes were kept submersed in the calcium solution in the retention bath overnight during 18 hours at a temperature of 7°C. To remove any microbial contamination, the food product was heated in a water bath at 75°C for 25 min. Finally, the food product was allowed to cool down to room temperature and frozen to minus 18°C.

### Example 3

A pre-mix was prepared having the same final composition as example 1, but by adding the pea protein, the sodium alginate, and the water directly to the milled mycoprotein, together with the chicken flavor and mixing all ingredients at the same time until a homogeneous pre-mix is obtained.

Finally, a food product was prepared according to the method of example 2.

### Example 4

A pre-mix was prepared according to example 1, but with mycoprotein sourced from Enough ("pre-mix Enough").

Finally, a food product was prepared according to the method of example 2.

### Example 5

In accordance with example 1, while however using mycoprotein from Enough, 771.2 gram of milled mycoprotein, 192.8 gram of the slurry (a 80:20 ratio of mycoprotein fraction and plant protein fraction), 7 gram sodium alginate, and 29 gram of chicken flavor were mixed until a homogeneous pre-mix was obtained.

The composition of the resulting pre-mix is shown in Table 2.

**Table 2. Composition data according to Example 5**

| **Slurry** | | | | |
|---|---|---|---|---|
| | **Compound** | | **Mass total batch (g)** | **Relative (%)** |
| | Pea protein | | 400.0 | 16.0% |
| | Sodium alginate | | 35.0 | 1.4% |
| | Water | | 2065.0 | 82.6% |
| | **Subtotal** | | **2500.0** | **100.0%** |

| **Pre-mix** | | | | |
|---|---|---|---|---|
| | **Compound** | | **Mass total batch (g)** | **Relative (%)** |
| | Mycoprotein | | 771.2 | 77.1% |
| | Slurry | | 192.8 | 19.3% |
| | | Pea protein | 30.8 | 3.1% |
| | | Sodium alginate | 2.7 | 0.3% |
| | | Water | 159.3 | 15.9% |
| | Sodium alginate | | 7 | 0.7% |
| | Chicken flavor | | 29 | 2.9% |
| | **Total** | | **1000.0** | **100.0%** |

Finally, a food product was prepared according to the method of example 2.

### Example 6

In accordance with example 1, while however using mycoprotein from Enough, 192.8 gram of milled mycoprotein, 771.2 gram of the slurry (a 20:80 ratio of mycoprotein fraction and plant protein fraction), 7 gram sodium alginate, and 29 gram of chicken flavor were mixed until a homogeneous pre-mix was obtained.

The composition of the resulting pre-mix is shown in Table 3.

**Table 3. Composition data according to Example 6**

| **Slurry** | | | | |
|---|---|---|---|---|
| | **Compound** | | **Mass total batch (g)** | **Relative (%)** |
| | Pea protein | | 400.0 | 16.0% |
| | Sodium alginate | | 35.0 | 1.4% |
| | Water | | 2065.0 | 82.6% |
| | **Subtotal** | | **2500.0** | **100.0%** |

| **Pre-mix** | | | | |
|---|---|---|---|---|
| | **Compound** | | **Mass total batch (g)** | **Relative (%)** |
| | Mycoprotein | | 192.8 | 19.3% |
| | Slurry | | 771.2 | 77.1% |
| | | Pea protein | 123.4 | 12.3% |
| | | Sodium alginate | 10.8 | 1.1% |
| | | Water | 637.0 | 63.7% |
| | Sodium alginate | | 7 | 0.7% |
| | Chicken flavor | | 29 | 2.9% |
| | **Total** | | **1000.0** | **100.0%** |

Finally, a food product was prepared according to the method of example 2.

### Comparative example A

The pre-mix of example 1 was added to a retention bath containing a 4% solution of calcium lactate in water. In contrast to example 2, after the pre-mix was flattened, and becoming fully submersed, the flattened pre-mix was first kept submersed in the calcium solution in the retention bath overnight (18 hours) at a temperature of 7 °C (in the refrigerator). Subsequently, individual shapes were prepared by breaking, rather than tearing, individual shapes from the pre-mix. Finally, the individual shapes were heated and frozen according to example 2.

### Comparative example B

In contrast to example 2, individual shapes were prepared from the pre-mix of example 1 first by tearing/forming pieces from the sticky pre-mix first, and adding the individual shapes to a retention bath containing a 4% solution of calcium lactate in water. The individual shapes were kept further submersed in the calcium solution in the retention bath overnight (18 hours) at a temperature of 7 °C (in a refrigerator). Finally, the individual shapes were heated and frozen according to example 2.

### Comparative example C

A pre-mix already containing calcium ions was prepared by adding 50 gram of a 4% solution of calcium lactate to the pre-mix of example 1, and further mixing until a homogeneous mixture was obtained. Individual shapes were subsequently prepared by tearing/forming pieces from the mixture. The pieces were then cooled overnight (18 hours) at a temperature of 7 °C (in a refrigerator). Finally, the individual shapes are heated according to example 2.

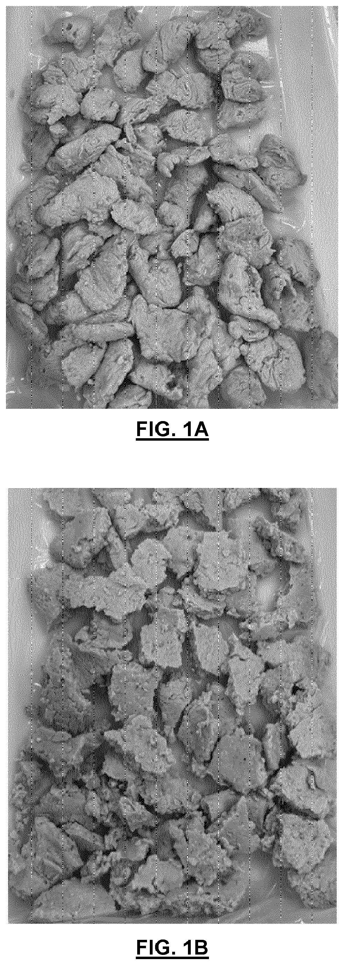

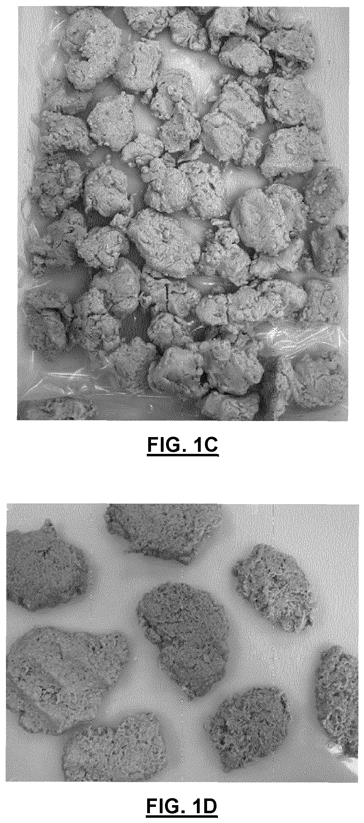

When qualitatively comparing the appearance and sensorial feeling of the food product or individual shapes prepared according to example 2 (FIG 1A), examples 3 to 6, and comparatives examples A, B and C (FIG 1B-1D), it becomes apparent that the food product prepared according to the method of the invention has the most desirable characteristics for a meat-like food product, such as chicken pieces, or beef chunks.

Figures 1A-1D show a picture of the appearance of the food product according to example 2, and of individual shapes of comparatives examples A, B and C, respectively.

Table 4 provides an overview of a qualitative assessment of the different food products or individual shapes in terms of 1) overall appearance, 2) shape, 3) surface smoothness, 4) fibrous appearance, and 5) touch. The qualitative assessment is scored from undesirable (-), over sufficient (+), to desirable (+++).

**Table 4. Results of qualitative assessment**

| | **Overall appearan ce** | **Shap e** | **Surface smoothnes s** | **Fibrous appearanc e** | **Touch** |
|---|---|---|---|---|---|
| **Example 2** | +++ | +++ | +++ | +++ | +++ |
| **Comp. example A** | - | - | ++ | - | +++ |
| **Comp. example B** | + | + | - | + | +++ |
| **Comp. example C** | - | - | - | - | - |

The food product prepared according to the method of the invention was found to have the most desirable overall appearance, including fibrous textural appearance, a meat-like shape resembling chicken pieces or beef chunks, a smooth surface and a non-sticky firmness when touched. In contrast, the individual shapes according to comparative example A, i.e. where the shapes are formed after the pre-mix has been allowed to cure overnight in a calcium solution in the refrigerator, have a more synthetic appearance, with smooth edges, and no fibrous textural appearance. The individual shapes according to comparative example B, i.e. where the individual shapes are formed first, before adding them to the calcium solution, and allowing them to further cure overnight, have a more lumpy appearance, an unsmooth surface, and only have a limited fibrous textural appearance. The individual shapes according to comparative example C, i.e. where the individual shapes are formed from a pre-mix already containing calcium ions, are very sticky and have only limited firmness. They moreover lack a meat-like appearance and even disintegrate when heated in a water bath at 75 °C.

The food product according to example 3 was found to have a similar overall appearance to the food products according to example 2.

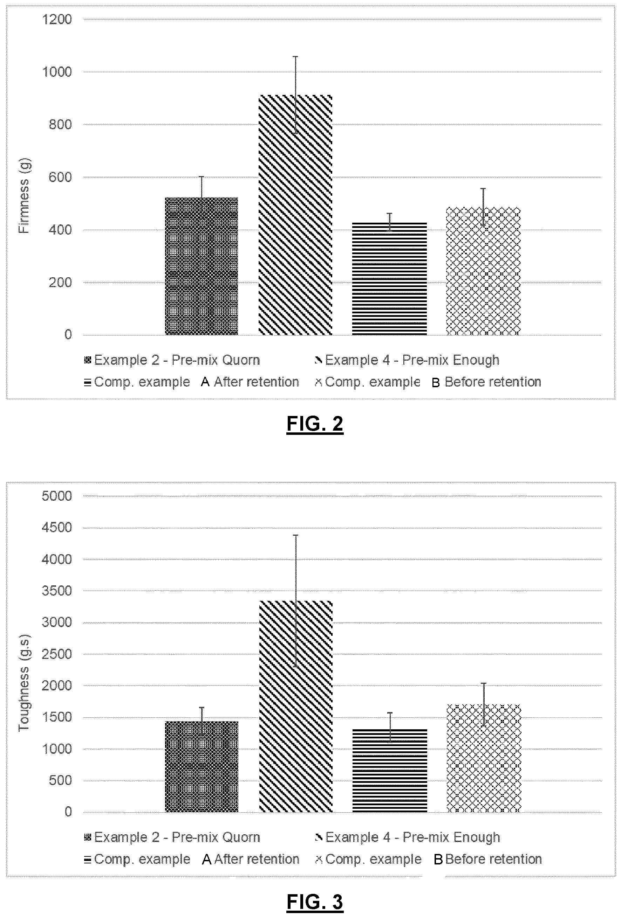

To perform a quantitative assessment of the sensorial properties of the food product or individual shapes of the different examples and comparative examples, 10 individual samples of examples 2 and 4, and comparative examples A and B were selected with a similar length (50-60 mm), width (35-40 mm), height (9-14 mm), and weight (11-14 gram). These samples were subsequently tested with a Meullent Owens Razor Shear Blade according to general procedure A. The results of the quantitative assessment are shown in Figure 2 and Figure 3 for firmness and toughness of the tested samples, respectively.

To determine the amount of calcium ions in the food product or individual shapes, already present from the raw materials used to prepare the individual shapes and/or accumulated during curing or further curing in a calcium solution, test samples were subjected to general procedure B. The amount of calcium in each of the tested samples is shown in Table 5.

**Table 5. Results of calcium measurements**

| | **Ca (mg/kg)** |
|---|---|
| **Example 4** | 330 |
| **Example 5** | 236 |
| **Example 6** | 296 |

To determine the dry matter content, or conversely the water content, test samples were subjected to general procedure C. The dry matter content and water content in each of the tested samples is shown in Table 6.

**Table 6. Results of dry matter measurements**

| | **dry matter (wt%)** | **water content (wt%)** |
|---|---|---|
| **Example 4** | 21.6 | 78.4 |
| **Example 5** | 22.1 | 77.9 |
| **Example 6** | 22.8 | 77.2 |

## Claims

1. A method for preparing a food product comprising mycoprotein, the method comprising the steps of:
a) preparing a pre-mix by mixing at least a mycoprotein, a plant protein, an alginate, and water;
b) shaping the pre-mix to form a pre-mix shape;
c) curing a skin part of the pre-mix shape by contacting the pre-mix shape from the outside with a first aqueous solution comprising calcium for a first contact time to obtain a skin-cured pre-mix shape;
d) forming individual shapes from the skin-cured pre-mix shape while substantially preserving the cured skin part;
e) further curing the individual shapes by contacting the individual shapes with a second aqueous solution comprising calcium for a second contact time, thereby providing the food product.

2. Method as claimed in claim 1, wherein the second contact time is longer than the first contact time.

3. Method as claimed in any one of the preceding claims, wherein the food product is heat-treated by heating to a temperature above 25°C during at least 5 min, and then cooled down to freezing temperatures.

4. Method as claimed in any one of the preceding claims, wherein the skin part of the skin-cured pre-mix shape in at least one cross-section comprises at most 50% of the at least one cross-sectional area of the skin-cured pre-mix shape, more preferably at most 40%, more preferably at most 30%, even more preferably from 0.1 to 20%, yet even more preferably from 0.5 to 10%, and yet even more preferably from 1 to 5% of the at least one cross-sectional area of the skin-cured pre-mix shape.

5. Method as claimed in any one of the preceding claims, wherein the individual shapes are contacted with the second aqueous solution comprising calcium at a temperature of at most 25 °C, preferably at most 15 °C, more preferably from 3 to 10 °C, even more preferably from 5 to 8 °C.

6. Method as claimed in any one of the preceding claims, wherein forming the individual shapes in step d) is carried out by tearing apart or cutting apart the skin-cured pre-mix shape.

7. Method as claimed in any one of the preceding claims, wherein the individual shapes are formed from the skin-cured pre-mix shape while the skin-cured pre-mix shape is in contact with the first or second aqueous solution comprising calcium.

8. Method as claimed in any one of the preceding claims, wherein the concentration of calcium in the first and/or second aqueous solution comprising calcium is at least 1 wt%, preferably from 2 to 10 wt%, more preferably from 3 to 5 wt%.

9. Method as claimed in any one of the preceding claims, wherein the first and/or second aqueous solution comprising calcium comprises a calcium salt selected from calcium acetate, calcium orthophosphate, calcium carbonate, calcium lactate, calcium ascorbate, calcium propionate, calcium sulfate, or any combinations thereof.

10. Method as claimed in any one of the preceding claims, wherein the first and the second solution aqueous solution comprising calcium are equal.

11. Method as claimed in any one of the preceding claims, wherein the pre-mix contains at least 5 wt% mycoprotein, preferably at most 35 wt%, more preferably from 10 to 30 wt%, even more preferably from 15 to 20 wt% on a dry-matter basis.

12. Method as claimed in any one of the preceding claims, wherein the pre-mix contains at least 2 wt% plant protein, preferably from 3 to 20 wt%, more preferably from 4 to 15 wt%, even more preferably from 5 to 10 wt%.

13. Method as claimed in any one of the preceding claims, wherein the pre-mix contains at least 0.1 wt% alginate, preferably from 0.2 to 2.0 wt%, more preferably from 0.3 to 1.5 wt%, even more preferably from 0.5 to 1.0 wt%.

14. Method as claimed in any one of the preceding claims, wherein the plant protein, the alginate and water are provided as a slurry by first mixing them separately, before mixing with the mycoprotein to obtain the pre-mix.

15. A food product comprising mycoprotein obtainable by the method according to any one of claims 1 to 14, the food product comprising a calcium content between 5 and 2000 ppm, more preferably between 50 and 1500 ppm, even more preferably between 100 and 1000 ppm, even more preferably between 150 and 600 ppm, and most preferably between 200 and 450 ppm.
